Europäisches Patentamt

European Patent Office

Office européen des brevets

(19)

(11) Numéro de publication: **0 165 117**
**B1**

(12) **FASCICULE DE BREVET EUROPEEN**

(45) Date de publication du fascicule du brevet: **03.10.90**

(51) Int. Cl.⁵: **G 05 B 19/42**

(21) Numéro de dépôt: **85400895.0**

(22) Date de dépôt: **07.05.85**

(54) **Procédé de suivi d'un joint par une torche de soudage et dispositif pour la mise en oeuvre de ce procédé.**

(30) Priorité: **11.05.84 FR 8407329**

(43) Date de publication de la demande:
**18.12.85 Bulletin 85/51**

(45) Mention de la délivrance du brevet:
**03.10.90 Bulletin 90/40**

(84) Etats contractants désignés:
**BE DE GB IT SE**

(56) Documents cités:
**EP-A-0 034 967**
**EP-A-0 076 498**
**EP-A-0 077 140**
**FR-A-2 477 935**
**GB-A-2 087 107**
**GB-A-2 088 095**
**GB-A-2 110 427**

(73) Titulaire: **COMMISSARIAT A L'ENERGIE ATOMIQUE**
**31/33, rue de la Fédération**
**F-75015 Paris (FR)**

(72) Inventeur: **Detriche, Jean-Marie**
**11, rue de la Tour**
**F-78360 Montesson (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention a pour objet un procédé de suivi d'un joint formé entre deux pieces a souder, par une torche de soudage liée à un porteur, ainsi qu'un dispositif pour la mise en oeuvre de ce procédé.

Le développement de la robotique correspond à la nécessité d'augmenter la production notamment dans tous les domaines industriels où la flexibilité du robot est mise à profit pour l'adapter à divers types de production sur des séries plus ou moins importantes. Ce développement correspond ainsi à la réduction des contraintes d'organisation et de planification des fabrications de petites et moyennes séries. Enfin, la robotique permet de résoudre des problèmes engendrés par des travaux insalubres ou dangereux.

L'industrie a un grand besoin de ces moyens évolués de manutention, manipulation ou fabrication. En particulier, le soudage à l'arc, avec ou sans métal d'apport, soulève aujourd'hui de nombreux problèmes spécifiques qui rendent nécessaire le développement de machines automatiques ou de robots adaptés à cette technique. Dans le domaine du soudage, il est souvent nécessaire de réaliser le suivi du joint à souder entre deux tôles avec une très grande précision, de façon rapide et reproductible. On sait en effet que l'assemblage par soudage d'un grand nombre d'éléments, avec une grande précision, sans possibilité de reprise ou d'erreur, nécessite une main-d'oeuvre très qualifiée et rare. Il est souvent impossible d'assurer une production intensive en raison de la fatigue et de la contrainte physique résultant de la précision demandée. Lorsque les pièces à souder sont de très grande dimension, il est souvent nécessaire qu'elles soient préchauffées avant soudage, ce qui oblige le soudeur à revêtir une protection spéciale pour les approcher. Il en résulte des conditions de travail insalubres et dangereuses. Lorsque le soudage est effectué entre des éléments déformables à la chaleur, toute machine automatique ou robot de soudage progrrammé sur une trajectoire très précise ne peut s'adapter à ces déformations qui peuvent atteindre plusieurs centimètres dans certains cas.

Il est donc nécessaire de prévoir des moyens pour ramener l'organe sur la ligne à suivre qui diffère, à cause des déformations, de la trajectoire mémorisée. Le demandeur a proposé dans le document FR—A—2 477 935 un procédé de positionnement d'un organe par rapport à une surface métallique et à une ligne formée sur cette surface. Selon cette invention, un organe est déplacé par un robot suivant une trajectoire mémorisée et est recalé automatiquement par un dispositif annexe intercalé entre l'extrémité du robot et l'organe sur une valeur prédéterminée des grandeurs suivantes: la distance séparant ledit organe de la surface et le décalage latéral dudit organe par rapport à une ligne formée sur cette surface.

Pour ramener l'organe sur la ligne à suivre, il est adjoint à cet organe un détecteur de position indiquant au système la valeur des grandeurs précitées. Des moyens d'asservissement sont prévus pour ramener l'organe de sa position réelle, qui est fonction de la trajectoire mémorisée, à sa position correcte qui est définie par les valeurs prédéterminées. Ce procédé est un procédé de suivi de trajectoire dans lequel l'organe est ramené en permanence sur la trajectoire à suivre lorsque celle-ci diffère de la trajectoire mémorisée.

Les documents GB—A—2 110 427, GB—A—2 088 095, EP—A—0 034 967 et EP—A—0 076 498, comme le document FR—A—2 477 935, concernent des procédés de suivi de joint en continu, au cours du soudage.

Le procédé de l'invention est de nature différente. Il consiste à faire un recalage de l'organe avant de suivre de trajectoire mémorisée. Il comprend à cet effet un détecteur de position et des moyens commandant un mouvement de l'organe relativement au porteur de cet organe selon au moins une direction contenue dans un plan transversal à la direction d'avance de l'organe.

On connaît des robots complexes permettant de recaler des trajectoires sur une ligne à suivre susceptible de se déplacer parallèlement ou non à la ligne mémorisée. Ceci est possible en ayant une action directe sur tous les degrés de liberté du robot considéré, ce qui sous-entend une possibilité d'entrée d'informations dans la commande du robot, et plus particulièrement une possibilité de modifier certains points de la trajectoire mémorisée par le robot. Ces robots sont généralement coûteux.

Le but de l'invention est de proposer un dispositif simple, économique et adaptable sur la grande majorité des robots qui ne sont pas dotés de moyens pour recevoir des signaux de commande de l'extérieur.

De manière précise, l'invention a pour objet un procédé de suivi de joint conforme a la revendication 1.

Selon une caractéristique préférée, la position de recalage associée à l'objet est un point de la ligne à suivre, par exemple le début de celle-ci.

Le procédé de l'invention est mis en oeuvre par un dispositif conforme a la revendication 4.

Selon une caractéristique secondaire, les commutateurs sont commandés par des signaux binaires engendrés par un robot guidant la torche.

Les caractéristiques et avantages de l'invention ressortiront mieux de la description qui va suivre, donnée à titre illustratif mais non limitatif en référence aux dessins annexés dans lesquels:

les figures 1a et 1b illustrent la phase d'apprentissage par un robot d'une trajectoire décrite par rapport à un objet,

la figure 2 illustre le recalage de l'organe et la restitution de la trajectoire mémorisée par le robot,

la figure 3 est un schéma du circuit électrique d'asservissement et/ou de blocage de la position de l'organe en fonction des signaux issus du détecteur de position et de signaux de commande des interrupteurs,

les figures 4a, 4b et 4c sont des vues en coupe d'un joint et d'un détecteur de position; elles représentent respectivement l'instant où l'organe est en position de référence, l'instant où il est décalé après un déplacement parallèle à la trajectoire mémorisée et l'instant où il est recalé sur la ligne à suivre,

la figure 5a est un mode de réalisation du détecteur de position du type sonde à courant de Foucault et les figures 5b et 5c représentent les signaux électriques délivrés par la sonde en fonction respectivement du décalage latéral du détecteur de position par rapport à l'axe du joint et de la hauteur du détecteur de position au-dessus de la surface des pièces formant le joint.

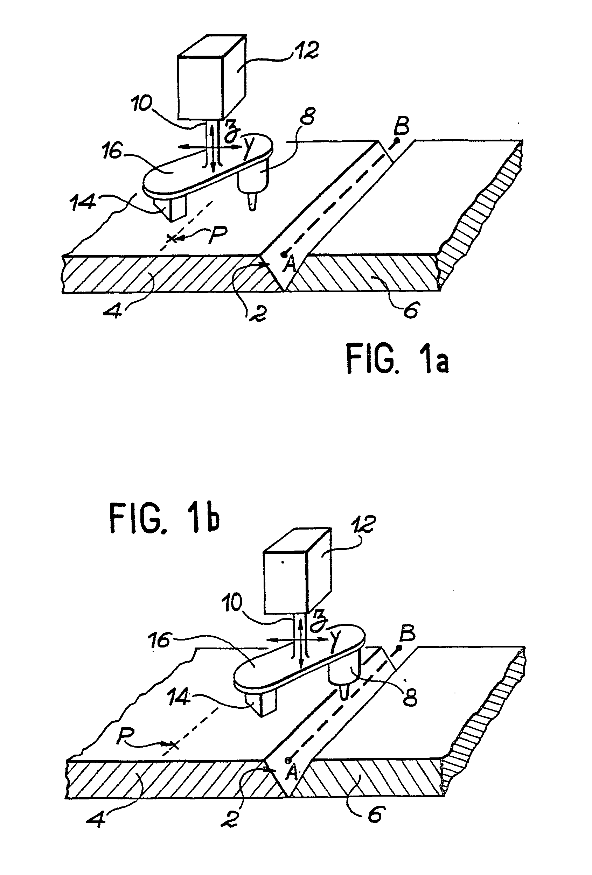

Avant de décrire un mode de réalisation du dispositif de recalage de trajectoire selon l'invention, il n'est pas inutile de rappeler comment est mémorisée la trajectoire que l'organe est appelé à suivre automatiquement. On va décrire l'apprentissage de cette trajectoire en référence aux figures 1a et 1b en prenent l'exemple du suivi d'un joint par une torche de soudage.

Sur ces figures, la trajectoire à mémoriser est représentée par un segment de droite AB. De manière plus générale, le procédé de l'invention peut s'appliquer à toute trajectoire de faible courbure. Cette trajectoire correspond à la direction d'un joint 2 formé par la juxtaposition de deux pièces chanfreinées 4 et 6. L'organe appelé à suivre cette trajectoire est une torche de soudage 8 fixée par un axe 10 et un support 16 à un système à chariots croisés 12. Un détecteur de position 14 est également fixé au support 16. Il est utilisé pour l'apprentissage de la ligne à mémoriser et pour le recalage de la torche sur la ligne à suivre lors de la restitution de la ligne mémorisée. Le système à chariots croisés 12 permet de déplacer relativement au porteur la torche de soudage 8 et le détecteur de position 14 selon deux directions orthogonales Y et Z définies par rapport au porteur. Le plan de détection et les axes de mesure du capteur sont parallèles au plan YZ. Lors de la programmation du robot, on s'arrange pour que le plan de détection soit transversal à la ligne à suivre.

L'apprentissage de la trajectoire s'effectue de la manière suivante. La torche de soudage 8 et le détecteur de position 14 sont maintenus bloqués dans une position de référence par rapport au porteur. Le déplacement du porteur est alors commandé de maniére classique par exemple par une boîte à boutons, par un opérateur pour amener le détecteur de position 14 au droit d'un point P de recalage (figure 1a), le plan de détection étant transversal à la ligne à suivre ou à la ligne de référence.

Ce point P est un point de l'objet, c'est-à-dire des pièces 4 et 6, qui permet lors de la restitution de la trajectoire le recalage de la torche de soudage sur la ligne réelle à suivre. Ce point de recalage est un point quelconque de l'objet sur lequel le détecteur de position peut être asservi en position. En pratique, il sera souvent plus simple de choisir comme point de recalage un point de la trajectoire mémorisée AB et en particulier l'un des points extrémes A ou B. Ceci n'est cependant pas impératif et il pourra être préférable dans certaines applications de choisir un point de recalage qui n'est pas sur la trajectoire AB.

Le déplacement du détecteur de position 14 au droit du point P détermine une position de recalage du porteur (ou de la torche) dans le plan perpendiculaire au segment AB. La position de recalage suivant les axes Y et Z est déterminée par le déplacement du porteur selon ces axes; on s'assure que dans la position de recalage définie lors de l'apprentissage, les signaux d'écart de distance issus du détecteur sont nuls. La position de recalage suivant l'axe Z définit l'altitude de la torche de soudage au-ddessus des pièces 4 et 6. Les coordonnées et l'orientation du porteur dans cette position de recalage sont mémorisées.

Le porteur est ensuite déplacé par des commandes sur le boîte à boutons afin de placer la torche de soudage au droit du point A, début de la trajectoire à mémoriser. Il est ensuite déplacé par des commandes sur la boîte à boutons, afin de placer la torche de soudage 8 au droit du point B (figure 1b). La trajectoire du porteur correspondant à la trajectoire AB de la torche est mémorisée.

Cette trajectoire mémorisée détermine la ligne suivie automatiquement par la torche de soudage fixée au porteur dans la position de référence. Elle est donc définie dans un référentiel lié au robot. En revanche, la ligne à suivre par la torche de soudage, c'est-à-dire la direction et la position du joint, dépendent de la position des deux pièces 4 à 6 par rapport au robot.

Il est évident que cette direction et cette position ne sont pas identiques pour toutes les pièces à souder. La ligne que doit suivre la torche de soudage 8 ne correspond donc pas en général avec la trajectoire mémorisée mais lui est approximativement parallèle. Il s'ensuit donc la nécessité de recaler l'organe de soudage 8 sur la ligne à suivre lorsque l'écart latéral est trop important.

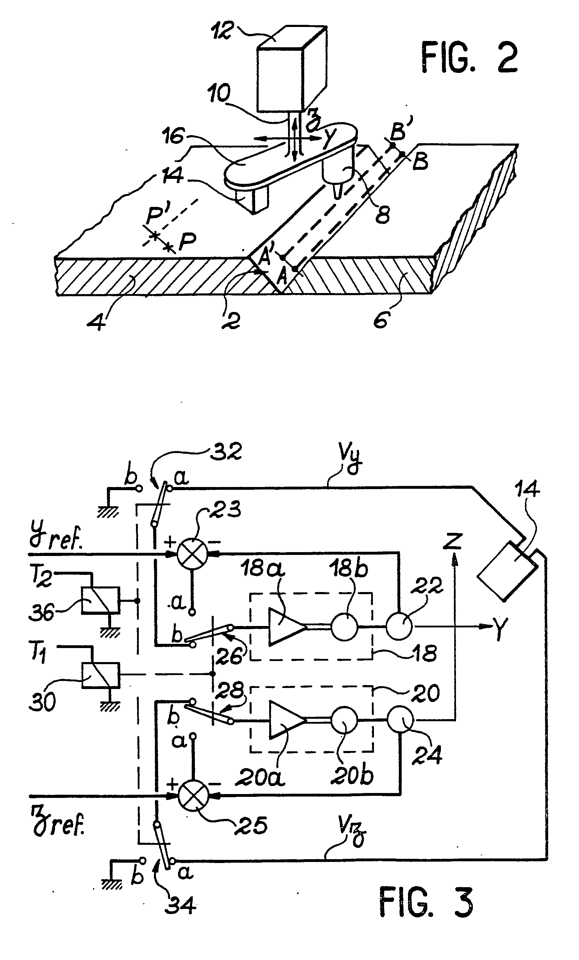

Selon l'invention, ce recalage s'effectue avant le soudage grâce à des moyens d'asservissement de la position de la torche de soudage 8 et à un détecteur de position. Le dessin schématique de la figure 2 permet d'expliquer le principe du fonctionnement du dispositif de recalage de l'invention. Sur cette figure, les éléments identiques à ceux de la figures 1a et 1b portent les mêmes références.

On a représenté sur cette figure la ligne à suivre par la torche de soudage 8 par un segment A'B'. On a également représenté le segment AB représentant la trajectoire mémorisée par le robot ou plus exactement la trajectoire de la torche de soudage 8 correrspondant à la trajectoire mémorisée du porteur, la torche de soudage étant fixée dans la position de référence audit porteur. On a également représenté le point de recalage P' des pieces 4 et 6 et la position du point de recalage P mémorisé lors de l'apprentissage.

La restitution de la trajectoire se fait de la manière suivante.

La torche de soudage 8 et le détecteur de position 14 sont maintenus bloqués par rapport au porteur. Celui-ci est amené automatiquement dans la position de recalage mémorisée P. Ensuite, en fonction de signaux délivrés par le détecteur de position 14, le système à chariots croisés 12 déplace l'ensemble torche de soudage-détecteur de position par rapport au porteur pour amener ledit détecteur de position dans la position de recalage P' liée aux pièces 4 et 6. Ceci se fait par asservissement des déplacements suivant les axes Y et Z, de manière à annuler les signaux d'écart de distance issus de détecteur. L'ensemble torche de soudage-détecteur de position est bloqué par rapport au porteur dans cette position recalée.

Le porteur étant alors déplacé au début de la trajectoire mémorisée, la torche de soudage se trouve au droit du point A', début de la trajectoire à suivre. Si le recalage sur le point P n'avait pas été effectué, la torche se serait trouvée au droit du point A et le soudage aurait été fait sur le trajectoire AB.

La restitution de la trajectoire mémorisée du porteur a alors pour résultat le suivi de la trajectoire A'B' par la torche de soudage.

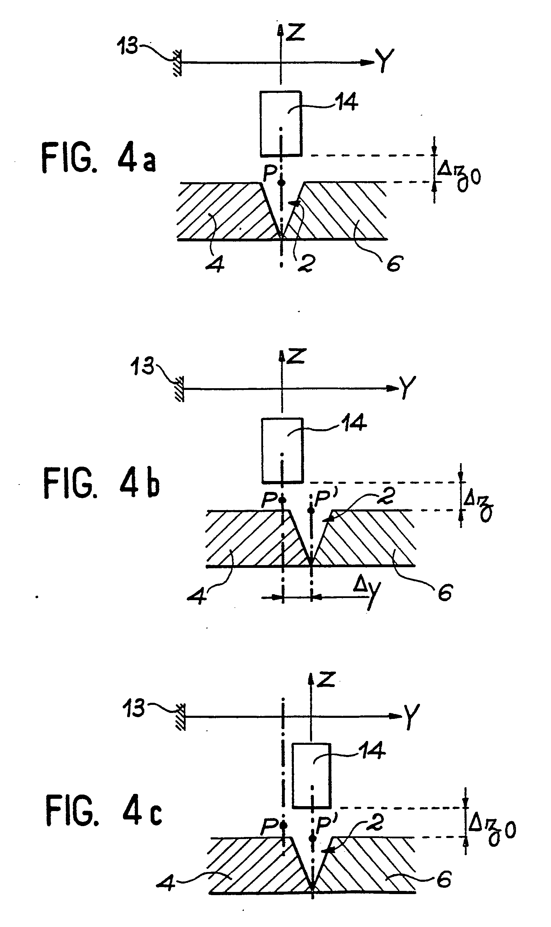

On va maintenant décrire en référence à la figure 4 un mode de réalisation du dispositif de l'invention permettant de déplacer la torche de soudage pour réaliser la trajectoire A'B'.

Ce dispositif comprend un premier moyen de déplacement 18 suivant l'axe Y constitué d'un amplificateur 18a et d'un moteur 18b de déplacement en translation du chariot Y et un second moyen de déplacement 20 suivant l'axe Z constitué d'un amplificateur 20a et d'un moteur 20b de déplacement en translation du chariot Z, ces moyens de déplacement constituant les éléments principaux du système à chariots croises permettant le déplacement de la torche de soudage et du détecteur de position relativement au porteur.

Le dispositif comprend en outre un codeur de position 22 associé au premier moyen de déplacement 18, un soustracteur 23 recevant sur son entrée positive un signal de référence $y_{ref}$ et sur son entrée négative le signal délivré par le codeur de position 22, un codeur de position 24 associé au second moyen de déplacement 20, un soustracteur 25 recevant sur son entrée positive un signal de référence $z_{ref}$ et sur son entrée négative le signal délivré par le codeur de position 24, et le détecteur de position 14 délivrant des signaux $V_y$ et $V_z$.

Il comprend enfin des commutateurs 26 et 28 commandés par un relais 30 et des commutateurs 32 et 34 commandés par un relais 36 qui permettent soit de bloquer la torche de soudage en position de référence par rapport au porteur, soit d'asservir la torche de soudage sur la ligne à suivre A'B', soit de bloquer la torche de soudage relativement au porteur.

Le commutateur 26 peut relier soit la sortie du soustracteur 23 au moyen de déplacement 18, soit le commutateur 32 au moyen de déplacement 18, l'autre extrémité dudit commutateur 32 étant reliée soit à la masse, soit au détecteur de position 14. Les commutateurs 28 et 34 jouent sur la direction Z respectivement le même rôle que les commutateurs 26 et 32 sur la direction Y.

Ce dispositif permet très simplement de restituer la trajectoire A'B' par la commande des commutateurs 26, 28, 32 et 34.

Pour présenter la torche de soudage et le détecteur en position de référence avant la restitution de la trajectoire, il suffit d'actionner le relais 30 de sorte que les commutateurs 26 et 28 se retrouvent en position a. La position de la torche de soudage est alors asservie sur les axes Y et Z par les signaux de tension de référence $y_{ref}$ et $z_{ref}$. La torche de soudage est alors en position de référence par rapport au porteur.

Le porteur est ensuite amené en position de recalage, ce qui positionne le détecteur de position au droit du point de recalage mémorisé P.

Les interrupteurs 26 et 28 sont alors mis en position b et les interrupteurs 32 et 34 sont mis en position a par une commande adéquate sur les relais 30 et 36. Dans cet état du dispositif, chaque moyen de déplacement 18, 20 reçoit un signal délivré par le détecteur de position 14. Il y a donc déplacement de la torche de soudage et du détecteur de position par rapport au porteur jusqu'à ce que les signaux issus du détecteur de position s'annulent, ce qui a lieu lorsqu'il est en regard du point de recalage P'. Les commutateurs 32 et 34 sont alors remis en position b par une commande adéquate sur le relais 36 afin de bloquer la position de la torche de soudage et du détecteur de position sur la position recalée.

Les signaux de commande $T_1$ et $T_2$ des relais peuvent être avantageusement des signaux binaires produits par le robot.

On a indiqué plus haut que le point de recalage P est un point quelconque de l'objet sur lequel le détecteur de position est susceptible d'être asservi en position. Dans la suite du texte, on se placera dans le cas particulier, important en pratique, où ce point de recalage est un point de la trajectoire AB. Le recalage consiste alors à placer le détecteur de position dans l'axe du joint.

La position du détecteur de position 14, et donc de la torche de soudage, en fonction de l'état des commutateurs 26, 28, 32 et 34 est indiquée en référence aux figures 4a, 4b et 4c dans ce cas particulier. Ces figures représentent une vue selon une coupe perpendiculaire à la direction d'avance de la torche. Sur ces figures, la référence 13 indique le porteur immobile pendant le recalage.

La figure 4a illustre le blocage du détecteur de position 14 sur le point de recalage P pendant l'apprentissage de la trajectoire. Cette position correspond à un décalage latéral $\Delta y$ nul par rapport au joint 2 et une altitude $\Delta z_0$ au-dessus de la surface des pièces 4 et 6. Les signaux d'écart de distance correspondants selon les axes Y et Z sont nuls.

Lors de la restitution de la trajectoire, le détecteur de position 14 est à nouveau amené sur le point de recalage mémorisé P qui est décalé par rapport au joint 2 à suivre tel qu'il est représenté sur la figure 4b. Le détecteur de position 14 émet

des signaux $V_y$ et $V_z$ correspondant aux décalages, $\Delta y$ et $\Delta z$, ce qui permet de ramener par asservissement le détecteur de position dans la position correcte vis-à-vis du joint, c'est-à-dire en regard du point P'. La figure 4c illustre cette position recalée du détecteur de position 14.

Il est connu d'utiliser un détecteur de position, soit de nature tactile, soit de nature optique. Ces détecteurs peuvent être délicats à mettre en oeuvre dans certaines applications, telles que le soudage, à cause de l'environnement difficile: chaleur, vibrations, rayonnements lumineux dus à la torche,...

A titre d'exemple, on va décrire un autre type de détecteur de position comportant une sonde à courants de Foucault qui est mieux adapté au cas du soudage. L'utilisation d'un tel détecteur est limité au cas où l'objet au-dessus duquel se déplace le détecteur de position est métallique.

Rappelons que le principe d'une telle sonde consiste à alimenter une bobine par un courant électrique sinusoïdal haute fréquence, de manière à créer un champ alternatif qui induit dans une pièce en matériau conducteur de l'électricité disposée en vis-à-vis de la sonde des courants de Fourault créant en retour un champ qui s'oppose au champ initial et modifie l'impédance de la bobine. Les variations de l'impédance de la bobine donnent donc une indication de la disposition de la bobine par rapport à la pièce en vis-à-vis et par rapport à une discontinuité sur cette pièce.

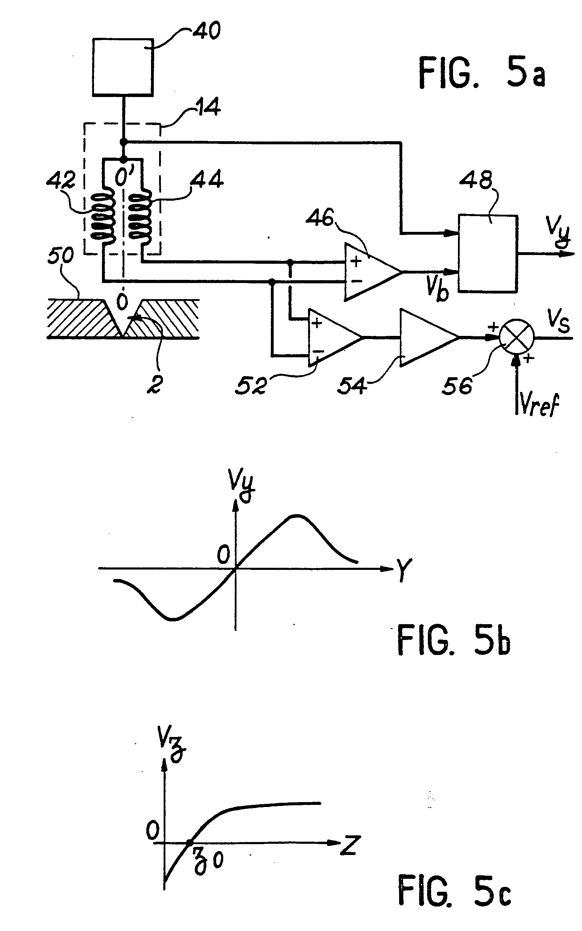

La figure 5a illustre un mode de réalisation de cette sonde à courants de Foucault. Cette sonde comprend principalement un oscillateur 40, deux bobines 42 et 44 formant le détecteur de position 14 et un circuit de traitement délivrant les signaux $V_y$ et $V_z$ indicateurs de la distance du détecteur de position du point de recalage P', c'est-à-dire de la distance de la torche à la ligne à suivre.

L'oscillateur 40 délivre un même signal aux deux bobines 42 et 44. Chacune de ces bobines déphase ce signal en fonction de sa position par rapport au joint 2. Ces signaux déphasés sont reçus dans un amplificateur différentiel 46 qui délivre un signal $V_b$. Ce signal est injecté dans un moyen de traitement 48, de type connu, dans lequel est également injecté le signal délivré par l'oscillateur 40. Ce moyen de traitement délivre le signal $V_y$ représentatif de la différence de phase entre le signal injecté dans chacune des bobines et celui aux bornes des bobines.

L'allure de ce signal est représentée sur la figure 5b en fonction du décalage latéral de l'axe 00' de la sonde par rapport à l'axe du joint 2. Ce signal $V_y$ est nul lorsque les deux axes coïncident. Il est négatif lorsque la sonde est d'un côté du joint et positif de l'autre. Ce signal peut donc être utilisé pour asservir la position du détecteur de position afin de le recaler dans l'axe du joint.

La tension aux bornes de chacune des bobines 42 et 44 est reçue également dans un sommateur 52 qui délivre un signal sinusoïdal dont la composante continue est obtenue au moyen d'un intégrateur 54. Au signal de tension continue délivré par cet intégrateur est ajouté dans un additionneur 56 un signal de décalage $V_{ref}$. Le signal $V_z$ obtenu est représentatif de la somme des signaux aux bornes des bobines de la sonde.

On a représenté sur la figure 5c l'allure de ce signal $V_z$ en fonction de la distance des bobines à la surface 50 des pièces à souder. La distance $\Delta z_0$ pour laquelle la tension $V_z$ est nulle est fixée par la tension de référence $V_{ref}$. Ce signal de tension $V_s$ peut ainsi servir à l'asservissement de la distance du détecteur par rapport à la surface des pièces à souder.

**Revendications**

1. Procédé de suivi d'un joint (2) formé entre deux pièces (4, 6) à souder, par une torche de soudage (8) liée à un porteur par l'intermédiaire d'un système (12) apte à translater simultanément par rapport au porteur la torche (8) et un détecteur de position (14) fixé à cette dernière, ce procédé comprenant:

une étape d'apprentissage de trajectoire consistant, en agissant sur le porteur et après blocage du système (12), à amener le détecteur de position (14) dans une position de recalage (P) liée aux pièces, à mémoriser cette position, puis à déplacer ce détecteur le long du joint en mémorisant la trajectoire (AB) à suivre; et

une étape de soudage au cours de laquelle le porteur fait suivre à la torche la trajectoire (AB) mémorisée;

ce procédé étant caractérisé par le fait qu'il comprend, préalablement à l'étape de soudage, une étape de recalage de la torche (8) sur une trajectoire réelle (A'B') approximativement parallèle à la trajectoire (AB) mémorisée, cette étape de recalage consistant:

à déplacer le porteur relativement aux pièces pour amener l'outil dans la position de recalage mémorisée;

à mesurer à l'aide du détecteur (14) la distance séparant la position de recalage mémorisée (P) d'une position de recalage réelle (P') liée aux pièces à souder;

à translater, à l'aide du système (12), la torche (8) par rapport au porteur pour annuler ladite distance;

à bloquer le système (12); et

à déplacer le porteur relativement aux pièces à souder pour amener la torche (8) au début de la trajectoire (AB) mémorisée, qui coïncide alors avec la trajectoire réelle (A'B').

2. Procédé selon la revendication 1, caractérisé par le fait que la position de recalage réelle associée aux pièces est un point de la ligne (A'B') à suivre.

3. Procédé selon l'une quelconque des revendications 1 et 2, caractérisé par le fait qu'au cours de l'étape de recalage, on mesure à la fois la distance selon une direction de décalage latéral Y et selon une direction de décalage en altitude Z orthogonale à la précédente, puis on translate la torche (8) selon ces deux directions.

4. Dispositif pour la mise en oeuvre du procédé selon l'une quelconque des revendications précédentes, comprenant une torche de soudage (8) et un détecteur de position (14) fixés l'un à l'autre et reliés à un porteur par l'intermédiaire d'un système (12) comprenant au moins un chariot apte à translater simultanément la torche et le détecteur dans une direction (Y, Z) donnée par rapport au porteur, le système (12) comprenant de plus, pour chaque chariot, un moyen de déplacement (18, 20) en translation de la torche (8), et un codeur de position (22, 24) associé à ce moyen de déplacement, ce dispositif étant caractérisé par le fait qu'il comprend de plus des commutateurs (26, 28, 32, 34) aptes à occuper une première position dans laquelle chaque moyen de déplacement est actionné pour placer automatiquement la torche (8) dans une position de référence par rapport au porteur, une deuxième position dans laquelle chaque moyen de déplacement est actionné par une chaîne d'asservissement pour annuler automatiquement un signal correspondant émis par le détecteur de position (14), et une troisième position dans laquelle la position de la torche (8) par rapport au porteur est bloquée.

5. Dispositif selon la revendication 4, caractérisé par le fait que les commutateurs (26, 28, 32, 34) sont commandés par des signaux binaires engendrés par un robot guidant la torche.

**Patentansprüche**

1. Verfahren zum Verfolgen einer Naht (2) zwischen zwei zu verschweißenden Teilen (4, 6) durch einen Schweißkopf (8), der über ein System (12), das geeignet ist, sich gleichzeitig bezüglich eines Schweißkopf (8)-Trägers und eines an letzteren befestigten Positionsdetektors (14) zu bewegen, an einen Träger befestigt ist, wobei dieses Verfahren umfaßt:
    einen Schritt zum Lernen eines Weges, der darin besteht, durch Einwirken auf den Träger und nach Blockieren des System (12) den Positionsdetektor (14) in eine mit den Teilen verbundene Rückstellposition (P) zu bringen, diese Position zu speichern und dann diesen Detektor entlang der Naht zu bewegen, wobei der zu verfolgende Weg (AB) gespeichert wird; und
    einen Schweißschritt, bei dessen Verlauf der Träger den Schweißkopf den gespeicherten Weg (AB) folgen läßt;
    wobei dieses Verfahren charakterisiert ist durch die Tatsache, daß es vor dem Schweißschritt einen Rückstellschritt des Schweißkopfs (8) auf einem reellen Weg (A'B'), der ungefähr parallel zum gespeicherten Weg (AB) ist, umfaßt, wobei dieser Rückstellschritt besteht aus;
    dem Bewegen des Trägers bezüglich der Teile, um das Werkzeug in die gespeicherte Rückstellposition zu bringen;
    dem Messen des Abstandes, der die gespeicherte Rückstellposition (P) von einer mit den zu verschweißenden Teilen verbundenen, reellen Rückstellposition (P') trennt, mittels des Detektors (14);
    dem Blockieren des Systems; und
    dem Bewegen des Trägers bezüglich der zu verschweißenden Teile, um den Schweißkopf (8) an den Anfang des gespeicherten Wegs (AB) zu bringen, der nun mit dem reellen Weg (A'B') zusammenfällt.

2. Verfahren nach Anspruch 1, gekennzeichnet durch die Tatsache, daß die reelle, mit den Teilen verbundene Rückstellposition ein Punkt der zu verfolgenden Linie (A'B') ist.

3. Verfahren nach einem der Ansprüche 1 und 2, gekennzeichnet durch die Tatsache, daß man während des Verlaufs des Rückstellschritts zugleich den Abstand entlang einer lateralen Rückstellrichtung Y und entlang einer vertikalen, zur vorigen senkrechten Rückstellrichtung Z mißt und daß man dann den Schweißkopf (8) entlang dieser beiden Richtungen bewegt.

4. Vorrichtung zum Durchführen des Verfahrens nach einem der vorhergehenden Ansprüche, welche aufweist: einen Schweißkopf (8) und einen Positionsdetektor (14), die aneinander befestigt sind und über ein System (12), das wenigstens einen Wagen umfaßt, der geeignet ist, den Schweißkopf und den Detektor gleichzeitig in eine gegebene Richtung (Y, Z) zu bewegen, mit einem Träger verbunden sind, wobei das System (12) außerdem für jeden Wagen eine Translationsbewegungsvorrichtung (18, 20) für den Schweißkopf (8) und einen mit dieser Bewegungsvorrichtung verbundenen Positionskodierer (22, 24) umfaßt, wobei diese Vorrichtung gekennzeichnet ist durch die Tatsache, daß sie außerdem Kommutatoren (26, 28, 32, 34) umfaßt, die geeignet sind, eine erste Position einzunehmen, in der jede Bewegungsvorrichtung betrieben wird, um den Schweißkopf (8) automatisch in eine Referenzposition bezüglich des Trägers zu bringen, eine zweiten Position einzunehmen, in der jede Bewegungsvorrichtung über eine Steuerungskette betrieben wird, um automatisch ein entsprechendes, vom Positionsdetektor (14) abgegebenes Signal auszugleichen, und eine dritte Position einzunehmen, in der die Position des Schweißkopfs (8) bezüglich des Trägers blockiert ist.

5. Vorrichtung nach Anspruch 4, gekennzeichnet durch die Tatsache, daß die Kommutatoren (26, 28, 32, 34) durch von einem den Schweißkopf führenden Roboter erzeugte binäre Signale gesteuert werden.

**Claims**

1. Process for following a joint (2) formed between two parts (4, 6) to be welded by a welding torch (8) connected to a carrier by means of a system (12) able to move simultaneously with respect to the carrier both the torch (8) and a position detector (14) fixed to the latter, said process comprising a trajectory learning stage consisting, by acting on the carrier and after locking the system (12), of bringing the position detector (14) into a resetting position (P) linked with the parts, storing said position and then displacing the said detector along the joint, whilst storing the trajectory (AB) to be followed and a welding stage during which the carrier makes the torch follow the stored trajectory (AB), said process being characterized in that it comprises, prior to the welding stage, a stage of resetting the torch (8) on a real trajectory (A'B') approximately parallel to the stored trajectory (AB), said resetting stage comprising displacing the carrier relative to the parts in order to bring the tool into the stored resetting position, measuring with the aid of the detector (14), the distance separating the stored resetting position (P) from a real resetting position (P') linked with the parts to be welded, moving the torch with respect to the carrier in order to cancel out said distance with the aid of the system (12), locking the latter and displacing the carrier relative to the parts to be welded in order to bring the torch (8) to the start of the stored trajectory (AB), which then coincides with the real trajectory (A'B').

2. Process according to claim 1, characterized in that the real resetting position associated with the parts is a point on the line (A'B') to be followed.

3. Process according to either of the claims 1 and 2, characterized in that during the resetting stage, measurement takes place of both the distance in a lateral displacement direction (Y) and in an altitude displacement direction (Z) orthogonal to the aforementioned direction, followed by the movement of torch (8) in these two directions.

4. Apparatus for performing the process according to any one of the preceding claims comprising a welding torch (8) and a position detector (14) fixed to one another and connected to a carrier by means of a system (12) comprising at least one carriage able to simultaneously move the torch and the detector in a given direction (Y, Z) with respect to the carrier, the system (12) also comprising, for each carriage, a means (18, 20) for the displacement in translation of the torch (8) and a position coder (22, 24) associated with said displacement means, said apparatus being characterized in that it also comprises switches (26, 28, 32, 34) able to occupy a first position in which each displacment means is actuated in order to automatically place the torch (8) in a reference position relative to the carrier, a second position in which each displacement means is actuated by a servocontrol chain in order to automatically cancel out a corresponding signal emitted by the position detector (14) and a third position in which the position of the torch (8) relative to the carrier is locked.

5. Apparatus according to claim 4, characterized in that the switches (26, 28, 32, 34) are controlled by binary signals produced by a robot guiding the torch.

FIG. 1a

FIG. 1b

FIG. 2

FIG. 3

FIG. 4a

FIG. 4b

FIG. 4c

FIG. 5a

FIG. 5b

FIG. 5c